Europäisches Patentamt

European Patent Office

Office européen des brevets

(11) Publication number: **0 286 148 B1**

(12) **EUROPEAN PATENT SPECIFICATION**

(45) Date of publication of patent specification: **29.04.92**  (51) Int. Cl.⁵: **C08F 4/685**, C08F 10/02

(21) Application number: **88200296.7**

(22) Date of filing: **18.02.88**

(54) **High-temperature (co)polymerization of ethylene using a catalyst system.**

(30) Priority: **09.03.87 NL 8700558**

(43) Date of publication of application:
**12.10.88 Bulletin  88/41**

(45) Publication of the grant of the patent:
**29.04.92 Bulletin  92/18**

(84) Designated Contracting States:
**AT BE CH DE ES FR GB IT LI NL SE**

(56) References cited:
**EP-A- 0 057 050**
**EP-A- 0 131 420**
**EP-A- 0 229 422**
**EP-A- 0 231 547**
**EP-A- 0 280 352**

(73) Proprietor: **DSM N.V.**
**Het Overloon 1**
**NL-6411 TE Heerlen(NL)**

(72) Inventor: **Blenkers, Johannes**
**Julianalaan 34**
**NL-6191 AM Beek(NL)**
Inventor: **Coosemans, Luc Maria Constant**
**Tulpenstraat 194**
**B-3530 Houthalen(BE)**
Inventor: **Van den Bosch, Frans**
**Holleweg 12**
**NL-6365 BS Schinnen(NL)**

Rank Xerox (UK) Business Services
(3.08/2.18/2.0)

## Description

The invention relates to a process for the (co)-polymerization of ethylene and optionally minor amounts of 1-alkenes and/or dienes at a temperature of at least 180□C in a polymerization vessel using a catalyst system.

There are numerous catalyst systems that are capable of bringing about polymerization of ethylene and/or 1-alkenes. Thus, for instance, so-called Phillips and Ziegler-Natta systems can be distinguished. Of these, a number relate to polymerization in the gas phase. Others are directed at polymerization in the presence of a liquid dispersant. The latter can be subdivided into the so-called suspension system, with polymerization taking place at temperatures below the dissolution temperature of polyethylene, and the so-called solution system, with a polymerization temperature above the dissolution temperature of the polyethylene formed.

Solution polymerization requires special catalyst systems as the catalyst activity and the molecular weight of the polymer produced generally decrease with increasing polymerization temperature. It was not until the end of the sixties that a catalyst was developed the activity of which was such as to allow of solution polymerization of ethylene without there being any need to remove catalyst residues from the product (GB-A 1,235,062).

Polymerization generally takes place at temperatures that are only little above the dissolution temperature of polyethylene, because the activity of catalysts customarily applied so far decreases at high polymerization temperatures. At unchanged residence times, this means that the polymer yield decreases, as a result of which the amounts of catalyst residues in the polymer increase and washing out of the polymer soon becomes necessary.

A problem in this exothermic polymerization reaction is the dissipation of the heat of polymerization. Cooling through the wall or through cooling devices in the reactor may easily lead to polymer deposition on the cooling surfaces, especially at coolant temperatures below 150□C. For this reason, strong cooling of the reactor feed is preferred. This, however, requires much energy and will become more expensive as fuel prices rise.

Polymerization at high temperatures would have energy advantages also in another respect: not only can the strong cooling of the reactor feed be reduced or even be done without, there also no longer is any need during polymer upgrading to heat the product in order to evaporate the solvent. The reason for this is that the heat of evaporation decreases or even becomes zero as the solution temperature increases and approaches, or even exceeds, the critical temperature of the solvent, and as a result the enthalpy of evaporation becomes minimal.

For the above reasons there is much demand for high-temperature catalysts. These catalysts should be so active as to retain sufficient activity also at very high polymerization temperatures (above 180□C). Present-day legislation renders it even more difficult to meet this requirement by imposing clear limits as regards the amount of transition metals in products. In addition, the polymer produced is to meet the customary requirements as regards processability and applicability, which implies the molecular weight must be sufficiently high, or the melt index sufficiently low.

The invention aims to find a process for the (co)polymerization of ethylene and optionally minor amounts of 1-alkenes and/or dienes at a temperature of at least 180□C in a polymerization vessel by using a catalyst system that meets the above requirements and that is suitable for plant application without sacrificing activity or the capacity to form large polymer molecules at very high polymerization temperatures.

It has, surprisingly, been found that in the claimed polymerization process using a catalyst system that is prepared by combining at least four components, which components comprise:

1. one or more titanium compounds
2. one or more vanadium compounds
3. only one organoaluminium compound
4. one or more chlorides,

the atomic ratio of chlorine to the sum of titanium and vanadium being at least 6, and the components being fed, separately or in combination, direct to the reactor, very high polymerization temperatures can be used.

An advantage of a catalyst system used in the process according to the invention is that very high temperatures can be used for the production of polyethylene meeting the customary requirements as regards processability and applicability and containing such a small amount of catalyst residues that washing out of the product is not necessary.

In EP-A-0229422 the use of a catalyst system in a polymerization process is described which catalyst system comprises a titanium compound, a vanadium compound, a first organoaluminum compound and additionally a second organoaluminum compound that is added to the catalyst system separately from the first organoaluminum compound.

The catalysts used in the process according to the subject invention not only are very active, hut also very rapid, so that very short residence times can be used. Short residence times have the great advantage that a small reactor can be used. Thus, in a 5 m³ reactor an annual production of more than 50,000 t can be reached when using the catalysts according to the invention.

With these catalysts, residence times of 10 minutes or shorter will suffice. At residence times of 5 minutes the yields still are so high that no washing treatment for catalyst residue removal need be applied.

Yet another advantage is that the components are fed direct to the reactor, that is, without heating, incubations, precipitate recovery and/or other treatments, which is a great advantage in plant application.

The residence time of the various catalyst components in the feed lines generally is sufficient for obtaining an active catalyst system. In most cases this residence time will not be longer than some, for instance 5, minutes, and often even less, for instance less than 3 minutes or even less than 1 minute.

Catalyst systems used in the process according to the invention have the highest activity at an atomic ratio of aluminium to the sum of titanium and vanadium of at least 3, in particular 5. It is recommendable for the atomic ratio of chlorine to the sum of titanium and vanadium to be at least 7.5, in particular at least 9. Furthermore, an atomic ratio of titanium to vanadium of at most 1, and in particular at most 0.8, is to be preferred.

The atomic ratio of aluminium to the sum of titanium and vanadium will generally not exceed 200, and in particular it will not exceed 100. The atomic ratio of titanium to vanadium usually is at least 0.001, in particular at least 0.01.

As titanium compounds, both tetra- and trivalent compounds of the general formulas $Ti(OR^1)_{4-n}X^1_n$ and $Ti(OR^2)_{3-m}X^2_m$, respectively, where the symbols $R^1$ and $R^2$ are equal or different and represent hydrocarbon residues with 1-20 carbon atoms, $X^1$ and $X^2$ halogen atoms, and $0 \leq n \leq 4$ and $0 \leq m \leq 3$, yield good results. Of these compounds, titanic acid esters such as TBT or TIPT are to be preferred. Titanium complexes such as, for instance $TiCl_3.3$ decanol, $TBT.AlCl_3$, $TBT.0.2$ $Cr(acac)_2$, $TBT.x$ $CrO_3$ and $TBT.x$ diethyl zinc ($0 < x \leq 1$) may also be applied. Compounds such as, e.g., cresyl titanate polymer ($CH_3C_6H_4[Ti-(OC_6H_4CH_3)_2O]a$ $OC_6H_4CH_3$ with $a \geq 1$) can likewise be applied (see the list of abbreviations hereinafter).

As vanadium compounds, use can be made of compounds of the general formula $VO(OR^3)_{3-p}X^3_p$, where the symbols $R^3$ are equal or different and represent a hydrocarbon residue with 1-20 carbon atoms, $X^3$ is a halogen atom and $0 \leq p \leq 3$, in particular vanadyl chloride and/or vanadyl butoxide. It is also possible to use vanadium compounds of the general formula $VX^4_3$ or $VX^4_4$, where $X^4$ repre-

sents a halogen atom. $X^4$ preferably is a chloride atom. Mixtures of titanium compounds and/or vanadium compounds can also be used as catalyst components.

The organoaluminium compound can be chosen from a large group of compounds. Preference is given to an organoaluminium compound of the general formula $R^4_qAlX^5_{3-q}$, where the symbols $R^4$ are equal or different and represent a hydrocarbon residue with 1-20 carbon atoms, in particular alkyl, $X^5$ represents a halogen atom, in particular chlorine, and $0 < a \leq 3$. Mixtures can also be applied.

Examples of organoaluminium compounds are: DEAC, MEAC, MMAC, SEAC, SMAC, TEA, TIBA, TMA, as well as compounds with aluminium bonded to oxygen, including alkyl siloxalanes. Particularly SEAC, DEAC, TMA and/or TEA yield good results. (See the list of abbreviations hereinafter).

The chlorides comprise alkyl chlorides (e.g. isopropyl chloride), acyl chlorides, aryl chlorides (e.g. benzyl chloride), hydrogen chloride, chlorides of elements from groups 3a and 4a of the Periodic System (Handbook of Chemistry and Physics, 52nd ed.), or combinations thereof. $SiCl_4$, $SnCl_4$ and/or $BCl_3$ are preferred.

An active catalyst yielding a high polymer molecular weight, also at very high polymerization temperatures, is obtained also when the catalyst system further comprises one or more electron donors (Lewis bases), such as, for instance, DEA, EB, IPA, acetyl acetone and/or MPT. (See the list of abbreviations hereinafter).

This electron donor is preferably supplied together with one of the other compounds, such as (one of) the transition metal compounds, for instance in the form of TBT, TIPT and/or VB, and in particular together with the organoaluminium compound.

The catalyst components may be fed to the reactor separately or in combination. The mixing sequence of the components is of little importance.

First, for instance, a titanium compound and a vanadium compound can he mixed, subsequently an organoaluminium compound, optionally in combination with an electron donor, can be added, and finally the chloride. It also is possible to first mix the organoaluminium compound with the chloride, and subsequently with a titanium compound and a vanadium compound. Another possibility is to add the organoaluminium compound to one of the transition metal compounds before adding the second transition metal compound. It may be preferable for the vanadium and titanium compounds to be mixed beforehand, especially when one of the two is less stable, such as $VOCl_3$.

There is advantage in using the mixing sequence: 1. organoaluminium compound (optionally with premixed electron donor); 2. one of the two transition metal compounds; 3. the other transition metal compound; 4. the chloride.

It also is possible to supply the catalyst components separately to the reator using separate feed lines. In that case for instance a combination of the transition metals can be fed through one feed line and a combination of the organoaluminium compound and the chloride through another feed line, or a combination of the transition metals and the chloride through one and the organoaluminium compound through another feed line.

In so far as the catalyst components are mixed before being supplied to the reactor, it is recommendable to effect this at a temperature below 125ºC, in particular below 75ºC, more in particular below 50ºC. The temperature will generally not be below -60ºC.

The presence or absence of monomer(s) during mixing of the catalyst components has little effect on catalyst activity.

The polymers obtained by the process according to the invention comprise ethylene, one or more 1-alkenes with 3 to 18 carbon atoms in an amount of 0 to 15 moles % relative to the total polymer, and one or more dienes with at least 7 carbon atoms in an amount of 0 to 10 moles % relative to the total polymer. Good properties are found in particular in polymers in which the dienes contain at least two non-conjugated double bonds capable of being polymerized by means of transition metal catalysts and in which the amount of dienes does not exceed 0.1 mole % relative to the total polymer.

These polymers may contain the customary additives, such as stabilizers, lubricants, and also, for instance, crosslinking agents and fillers.

Polymers obtained by means of a catalyst used in the process according to the invention possess the customary, commercially desirable properties, such as a sufficiently high molecular weight (low melt index) and good processability. They can be used for the preparation of cast film and blown film with good mechanical and optical properties, while also the rheological and welding properties meet the normal requirements. The polymers also are suitable for many other customary applications, e.g. injection moulding, blow moulding, rotational moulding.

Polymerization can subsequently be effected in a manner known per se, both batchwise and continuously. In general the catalyst components are added in such amounts that the amount of titanium in the polymerization medium is 0.001 to 4 mmole/l, preferably 0.005 to 0.5 mmole/l, and more in particular 0.01 to 0.05 mmole/l

As dispersant, both in catalyst preparation and in polymerization, use can be made of any liquid that is inert relative to the catalyst system, for instance one or more sutarated, straight or branched aliphatic hydrocarbons, such as butanes, pentanes, hexanes, heptanes, pentamethylheptane or petroleum fractions such as light or regular-grade petrol, isopar, naphtha, kerosine, gas oil. Aromatic hydrocarbons, for instance benzene or toluene, are usable, but such solvents will generally not be used in technical-scale production, both for cost considerations and for safety considerations. By preference, therefore, as solvent in technical-scale polymerizations use is made of the cheap aliphatic hydrocarbons, or mixtures thereof, as marketed by the petrochemical industry. In many cases, pretreatments of such solvents, for instance drying or purification, are required. This will present no problems whatsoever to the average person skilled in the art. Of course, cyclic hydrocarbons such as cyclohexane and decalin can also be used as solvent.

Polymerization is effected at temperatures above 180ºC, and more in particular at temperatures above 200ºC. For practical considerations the temperatures will generally not exceed 300ºC.

The polymer solution obtained upon polymerization can subsequently be upgraded in a way known per se, the catalyst generally being deactivated at some stage of upgrading.

Deactivation can be effected in a way known per se. The catalysts used in the process according to the present invention have such a high activity that the amount of catalyst in the polymer, notably the transition metal content, is so low that removal of catalyst residues can be done without. Of course the polymer can be subjected to a washing treatment to reduce the residual content of catalyst components even further, if this is desired.

Polymerization can be effected at atmospheric pressure but also at elevated pressure, up to about 1000 bar, or at even higher pressures, both in continuous and in discontinuous manner. By polymerizing under pressure, the polymer yield can be increased further, which may contribute to the preparation of a polymer with a very low content of catalyst residues.
Polymerization is preferably effected at pressures of 1-200 bar, and more in particularly of 10-100 bar.

Pressures in excess of 100 bar soon give rise to technological objections. However, pressures that are much higher, of 1000 bar and more, can be used if polymerization takes place in so-called high-pressure reactors.

In the subject process, modifications known per se can be applied. Thus, for instance, the molecular weight can be controlled by addition of hydrogen or other agents customarily applied for the purpose. Polymerization can also be effected in several stages, connected either in parallel or in series, in which, if desired, differing catalyst compositions, temperatures, residence times, pressures, hydrogen concentrations, are applied. It is, for instance, possible to prepare products with a broad molecular weight distribution by choosing the conditions, for instance pressure, temperature and hydrogen concentration, in one stage such that a polymer with a high molecular weight is formed, while the conditions in another stage are chosen such that a polymer with a low molecular weight is formed.

The invention will now be elucidated with reference to some examples, without, however, being restricted thereto.

List of abbreviations used:

- Acac = acetylacetonate
- BzCl = benzyl chloride
- DEA = diethylamine
- DEAC = diethylaluminium chloride
- EB = ethyl benzoate
- IPA = isopropyl alcohol
- IPCl = isopropyl chloride
- MEAC = monoethylaluminium dichloride
- MMAC = monomethylaluminium dichloride
- MPT = methylparatoluate
- SEAC = sesquiethylaluminium chloride (ethyl$_{1.5}$AlCl$_{1.5}$)
- SMAC = sesquimethylaluminium chloride (methyl$_{1.5}$AlCl$_{1.5}$)
- TBT = tetrabutoxytitanium
- TEA = triethylaluminium
- TIBA = triisobutylaluminium
- TIPT = tetraisopropoxytitanium
- TMA = trimethylaluminium
- VB = vanadyl butoxide

Polymerization experiments were conducted at 240¤C in a one-litre gas-liquid reactor with 500 ml purified and dried pentamethylheptane (PMH) as dispersant and ethylene to a reactor pressure of 17 bar. The catalyst components were premixed in PMH during 1 minute at 25¤C and subsequently pumped into the reactor. The polymerization time was 10 minutes. The polymer was stabilized, if necessary, dried and weighed. The yield is expressed in g polymer per mmole titanium + vanadium. The activity $\alpha$ of the catalyst system is expressed as g PE/mmole (Ti + V). 10 minutes. The melt index (M.I.) of the polymer, expressed in dg/min, is determined in accordance with ASTM D 1238, cond. E.

Example I

SEAC, TBT, VB and SiCl$_4$ were mixed in this sequence and fed to the reactor so that the amounts present during polymerization were 0.6, 0.04, 0.06 and 0.1 mmole/l, respectively. The catalyst had an activity $\alpha$ of 1012. The melt index of the polymer prepared was 9.5 dg/min.

Example II

Example I was repeated, this time with 0.16 mmole/l SiCl$_4$. The polymer had a melt index of 8.7 dg/min, while $\alpha$ was 1154.

Example III

Example I was repeated, now with 0.2 mmole/l SiCl$_4$. $\alpha$ was 1264, and the melt index 12.5 dg/min.

Comparative example 1

Example I was repeated without chloride. The melt index was 15.2, and $\alpha$ 798.

Example IV

The catalyst system of Example III was applied in a copolymerization of ethylene and octene-1. Before the ethylene, 25 ml octene-1 was fed to the reactor. The density of the copolymer was 933 kg/m$^3$ (ASTM D 1505), the melt index 9.7, and $\alpha$ 1203.

Example V

Example IV was repeated in the presence of 50 ml 1-octene. The density was 929 kg/m$^3$, the melt index 6.0 dg/min and $\alpha$ 932.

Example VI

Example III was repeated, but now with benzyl chloride instead of SiCl$_4$. $\alpha$ was 1164, the melt index 10 dg/min.

Comparative example 2

Example III was repeated, but this time with 0.1 mmole/l TBT and without vanadium compound. The catalyst was not active.

Example VII

Example III was repeated, but now with isopropyl chloride instead of SiCl$_4$. $\alpha$ was 1103, the melt index 11 dg/min.

Comparative example 3

SEAC, TBT and $VOCl_3$ were mixed in this order and fed to the reactor so that during the polymerization 0.6, 0.04 and 0.06 mmole/l, respectively, were present. $\alpha$ was 566.

Example VIII

DEAC and ethyl benzoate were mixed in such a ratio that 0.1 and 0.2 mmole/l, respectively, were present during polymerization. The catalyst system further consisted of TBT, VB and BzCl, in amounts of 0.04, 0.06 and 0.2 mmole/l, respectively, during polymerization. The order of addition was (DEAC + ethyl benzoate), TBT, VB, BzCl. $\alpha$ was 1083, the melt index 10 dg/min.

Example IX

Example VIII was repeated, but now with 0.2 mmole/l $SiCl_4$ instead of BzCl. $\alpha$ was 1009, the melt index 7.8 dg/min.

**Claims**

1.  Process for the (co)polymerization of ethylene and optionally minor amounts of 1-alkenes and/or dienes at a temperature of at least 180¤C in a polymerization vessel using a catalyst system, in which process the catalyst system is prepared by combining at least four components, which components comprise:
    1. one or more titanium compounds
    2. one or more vanadium compounds
    3. only one organoaluminium compound
    4. one or more chlorides,
    the atomic ratio of chlorine to the sum of titanium and vanadium being at least 6, and the components being fed, separately or in combination, direct to the polymerization vessel.

2.  Process according to claim 1, characterized in that the atomic ratio of aluminium to the sum of titanium and vanadium is at least 3.

3.  Process according to any one of claims 1-2, characterized in that the atomic ratio of chlorine to the sum of titanium and vanadium is at least 7.5.

4.  Process according to any one of claims 1-3, characterized in that the atomic ratio of titanium to vanadium is lower than or equal to 1.

5.  Process according to any one of claims 1-4, characterized in that the titanium compound belongs to the compounds of the general formula $(Ti(OR^1)_{4-n}X^1_n$ and/or $Ti(OR^2)_{3-m}X^2_m$, where the symbols $R^1$ and $R^2$ are equal or different and represent hydrocarbon residues with 1-20 carbon atoms, $X^1$ and $X^2$ halogen atoms, $0 \leqq n \leqq 4$ and $0 \leqq m \leqq 3$.

6.  Process according to claim 5, characterized in that the titanium compound is a titanic acid ester.

7.  Process according to claim 6, characterized in that the titanium compound is tetrabutoxytitanium.

8.  Process according to any one of claims 1-7, characterized in that the vanadium compound belongs to the compounds of the general formula $VO(OR^3)_{3-p}X^3_p$, where the symbols $R^3$ are equal or different and represent a hydrocarbon residue with 1-20 carbon atoms, $X^3$ a halogen atom, and $0 \leqq p \leqq 3$.

9.  Process according to claim 8, characterized in that the vanadium compound is vanadyl chloride and/or vanadyl butoxide.

10. Process according to any one of claims 1-7, characterized in that the vanadium compound belongs to the compounds of the general formula $VX^4_3$ or $VX^4_4$, where $X^4$ represents a halogen atom.

11. Process according to any one of claims 1-10, characterized in that also one or more electron donors are present.

12. Process according to any one of claims 1-11, characterized in that the organoaluminium compound belongs to the compounds of the general formula: $R^4_q AlX^5_{3-q}$, where the symbols $R^4$ are equal or different and represent a hydrocarbon residue with 1-20 carbon atoms, $X^5$ represents a halogen atom and $0 < q \leqq 3$.

13. Process according to claim 12, characterized in that the organoaluminium compound is trialkylaluminium, dialkylaluminium chloride and/or sesquialkylaluminium chloride.

14. Process according to any one of claims 1-13, characterized in that the chloride is an alkyl chloride, acyl chloride and/or aryl chloride a hydrogen chloride, one or more chlorides of elements from groups 3a and 4a of the Periodic System, or combinations of these.

**15.** Process according to claim 14, characterized in that the chloride is $BCl_3$, $SiCl_4$ and/or $SnCl_4$.

**16.** Process according to any one of claims 1-15, characterized in that the catalyst components are in combination supplied to the reactor.

**17.** Process according to claim 16, characterized in that first the organoaluminium compound, then the titanium compound or vanadium compound, subsequently the other transition metal compound and lastly the chloride are combined with one another.

**18.** Process according to any one of claims 1-15, characterized in that the organoaluminium compound and a combination of the titanium compound with the vanadium compound are separately fed to the reactor, the chloride being combined with the titanium compound and the vanadium compound and/or with the organoaluminium compound.

**19.** Process according to any one of claims 16-18, characterized in that the organoaluminium compound is mixed with an electron donor before being combined with the other catalyst components.

**20.** Process according to any one of claims 16-19, characterized in that the catalyst components are mixed at a temperature below 125¤C.

**21.** Process according to claim 20, characterized in that the catalyst components are mixed at a temperature below 75¤C.

**Revendications**

**1.** Procédé pour la (co)polymérisation de l'éthylène et éventuellement de petites quantités de 1-alcènes et/ou de diènes à une température d'au moins 180°C dans un récipient de polymérisation, en utilisant un système catalytique, le système catalytique dans ledit procédé étant préparé en combinant au moins quatre composants, lesdits composants comportant :
    1. un ou plusieurs composés du titane
    2. un ou plusieurs composés du vanadium
    3. seulement un composé organoaluminium
    4. un ou plusieurs chlorures,
le rapport atomique du chlore à la somme du titane et du vanadium étant d'au moins 6, et les composants étant introduits, séparément ou en combinaison, directement dans le récipient de polymérisation.

**2.** Procédé selon la revendication 1, caractérisé en ce que le rapport atomique de l'aluminium à la somme du titane et du vanadium est d'au moins 3.

**3.** Procédé selon l'une quelconque des revendications 1 ou 2, caractérisé en ce que le rapport atomique du chlore à la sommé du titane et du vanadium est d'au moins 7,5.

**4.** Procédé selon l'une quelconque des revendications 1 à 3, caractérisé en ce que le rapport atomique du titane au vanadium est inférieur ou égal à 1.

**5.** Procédé selon l'une quelconque des revendications 1 à 4, caractérisé en ce que le composé du titane appartient aux composés de formule générale $(Ti(OR^1)_{4-n}X^1_n$ et/ou $Ti(OR^2)_{3-m}X^2_m$, ou les symboles $R^1$ et R sont identiques ou différents et représentent des résidus hydrocarbonés ayant de 1 à 20 atomes de carbone, $X^1$ et $X^2$ représentent des atomes d'halogène, $0 \leq n \leq 4$ et $0 \leq m \leq 3$.

**6.** Procédé selon la revendication 5, caractérisé en ce que le composé de titane est un ester de l'acide titanique.

**7.** Procédé selon la revendication 6, caractérisé en ce que le composé de titane est le tétrabutoxytitane.

**8.** Procédé selon l'une quelconque des revendications 1 à 7, caractérisé en ce que le composé de vanadium appaitient aux composés de formule générale $VO(OR^3)_{3-p}X^3_p$, où les symboles $R^3$ sont identiques ou différents et représentent un résidu hydrocarboné ayant de 1 à 20 atomes hydrocarbonés, $X^3$ représente un atome d'halogène, et $0 \leq p \leq 3$.

**9.** Procédé selon la revendication 8, caractérisé en ce que le composé de vanadium est le chlorure de vanadyle et/ou le butoxyde de vanadyle.

**10.** Procédé selon l'une quelconque des revendications 1 à 7, caractérisé en ce que le composé de vanadium appaitient aux composés de formule générale $VX^4_3$ ou $VX^4_4$, où $X^4$ représente un atome d'halogène.

**11.** Procédé selon l'une quelconque des revendications 1 à 10, caractérisé en ce que aussi un ou plusieurs donneurs d'électrons sont présents.

12. Procédé selon l'une quelconque des revendications 1 à 11, caractérisé en ce que le composé organoaluminium appartient aux composés de formule générale : $R^4_q AlX^5_{3-q}$, où les symboles $R^4$ sont identiques ou différents et représentent un résidu hydrocarboné ayant de 1 à 20 atomes hydrocarbonés, $X^5$ représente un atome d'halogène et $0 < q \leq 3$.

13. Procédé selon la revendication 12, caractérisé en ce que le composé organoaluminium est un trialkylaluminium, un chlorure de dialkylaluminium et/ou un chlorure de sesquialkylaluminium.

14. Procédé selon l'une quelconque des revendications 1 à 13, caractérisé en ce que le chlorure est un chlorure d'alkyle, un chlorure d'acyle et/ou un chlorure d'aryle, un chlorure d'hydrogène, un ou plusieurs chlorures d'éléments des groupes 3a et 4a du système périodique, ou des combinaisons de ceux-ci.

15. Procédé selon la revendication 14, caractérisé en ce que le chlorure est $BCl_3$, $SiCl_4$ et/ou $SnCl_4$.

16. Procédé selon l'une quelconque des revendications 1 à 15, caractérisé en ce que les composants catalytiques sont introduits en combinaison dans le réacteur.

17. Procédé selon la revendication 16, caractérisé en ce que l'on combine ensemble tout d'abord le composé organoaluminium, puis le composé du titane ou du vanadium, ensuite l'autre composé de métal de transition et enfin le chlorure.

18. Procédé selon l'une quelconque des revendications 1 à 15, caractérisé en ce que le composé organoaluminium et une combinaison du composé du titane avec le composé de vanadium sont introduits séparément dans le réacteur, le chlorure étant combiné avec le composé de titane et le composé de vanadium et/ou avec le composé organoaluminium.

19. Procédé selon l'une quelconque des revendications 16 à 18, caractérisé en ce que le composé organoaluminium est mélangé avec un donneur d'électrons avant d'être combiné avec les autres composants catalytiques.

20. Procédé selon l'une quelconque des revendications 16 à 19, caractérisé en ce que les composants catalytiques sont mélangés à une température inférieure à 125°C.

21. Procédé selon la revendication 20, caractérisé en ce que les composants catalytiques sont mélangés à une température inférieure à 75°C.

**Patentansprüche**

1. Verfahren zur (Co)polymerisation von Ethylen und gegebenenfalls kleinen Mengen von 1-Alkenen und/oder Dienen bei einer Temperatur von wenigstens 180°C in einem Polymerisationskessel unter Verwendung eines Katalysatorsystems, in welchem Verfahren das Katalysatorsystem durch Kombinieren von wenigstens vier Komponenten hergestellt wird, welche Komponenten umfassen:
   1. eine oder mehrere Titanverbindungen
   2. eine oder mehrere Vanadiumverbindungen
   3. nur eine Organoaluminiumverbindung
   4. ein oder mehrere Chloride,
   wobei das Atomverhältnis von Chlor zur Summe von Titan und Vanadium wenigstens 6 beträgt und die Komponenten getrennt oder in Kombination direkt in den Reaktor eingespeist werden.

2. Verfahren nach Anspruch 1, dadurch gekennzeichnet, daß das Atomverhältnis von Aluminium zur Summe von Titan und Vanadium wenigstens 3 beträgt.

3. Verfahren nach einem der Ansprüche 1 bis 2, dadurch gekennzeichnet, daß das Atomverhältnis von Chlor zur Summe von Titan und Vanadium wenigstens 7,5 beträgt.

4. Verfahren nach einem der Ansprüche 1 bis 3, dadurch gekennzeichnet, daß das Atomverhältnis von Titan zu Vanadium kleiner oder gleich 1 ist.

5. Verfahren nach einem der Ansprüche 1 bis 4, dadurch gekennzeichnet, daß die Titanverbindung zu den Verbindungen der allgemeinen Formel $Ti(OR^1)_{4-n}X^1_n$ und/oder $Ti(OR^2)_{3-m}X^2_m$ gehört, worin die Symbole $R^1$ und $R^2$ gleich oder verschieden sind und Kohlenwasserstoffreste mit 1 bis 20 Kohlenstoffatomen darstellen, $X^1$ und $X^2$ Halogenatome bedeuten, $0 \leq n \leq 4$ und $0 \leq m \leq 3$ ist.

6. Verfahren nach Anspruch 5, dadurch gekennzeichnet, daß die Titanverbindung ein Titansäureester ist.

7. Verfahren nach Anspruch 6, dadurch gekennzeichnet, daß die Titanverbindung Tetrabutoxytitan ist.

8. Verfahren nach einem der Ansprüche 1 bis 7, dadurch gekennzeichnet, daß die Vanadiumverbindung zu den Verbindungen der allgemeinen Formel $VO(OR^3)_{3-p}X^3_p$ gehört, worin die Symbole $R^3$ gleich oder verschieden sind und einen Kohlenwasserstoffrest mit 1 bis 20 Kohlenstoffatomen darstellen, $X^3$ ein Halogenatom bedeutet und $0 \leq p \leq 3$ ist.

9. Verfahren nach Anspruch 8, dadurch gekennzeichnet, daß die Vanadiumverbindung Vanadylchlorid und/oder Vanadylbutoxid ist.

10. Verfahren nach einem der Ansprüche 1 bis 7, dadurch gekennzeichnet, daß die Vanadiumverbindung zu den Verbindungen der allgemeinen Formel $VX^4_3$ oder $VX^4_4$ gehört, worin $X^4$ ein Halogenatom darstellt.

11. Verfahren nach einem der Ansprüche 1 bis 10, dadurch gekennzeichnet, daß auch ein oder mehrere Elektronendonoren anwesend sind.

12. Verfahren nach einem der Ansprüche 1 bis 11, dadurch gekennzeichnet, daß die Organoaluminiumverbindung zu den Verbindungen der allgemeinen Formel: $R^4_qAlX^5_{3-q}$ gehört, worin die Symbole $R^4$ gleich oder verschieden sind und einen Kohlenwasserstoffrest mit 1 bis 20 Kohlenstoffatomen darstellen, $X^5$ ein Halogenatom bedeutet und $0 < q \leq 3$ ist.

13. Verfahren nach Anspruch 12, dadurch gekennzeichnet, daß die Organoaluminiumverbindung Trialkylaluminium, Dialkylaluminiumchlorid und/oder Sesquialkylaluminiumchlorid ist.

14. Verfahren nach einem der Ansprüche 1 bis 13, dadurch gekennzeichnet, daß das Chlorid ein Alkylchlorid, Acylchlorid und/oder Arylchlorid, ein Chlorwasserstoff, ein oder mehrere Chloride der Elemente der Gruppen 3a und 4a des Periodensystems oder Kombinationen derselben ist.

15. Verfahren nach Anspruch 14, dadurch gekennzeichnet, daß das Chlorid $BCl_3$, $SiCl_4$ und/oder $SnCl_4$ ist.

16. Verfahren nach einem der Ansprüche 1 bis 15, dadurch gekennzeichnet, daß die Katalysatorkomponenten in Kombination dem Reaktor zugeführt werden.

17. Verfahren nach Anspruch 16, dadurch gekennzeichnet, daß zuerst die Organoaluminiumverbindung, dann die Titanverbindung oder die Vanadiumverbindung, anschließend die andere Übergangsmetallverbindung und schließlich das Chlorid miteinander kombiniert werden.

18. Verfahren nach einem der Ansprüche 1 bis 15, dadurch gekennzeichnet, daß die Organoaluminiumverbindung und eine Kombination der Titanverbindung mit der Vanadiumverbindung getrennt in den Reaktor eingespeist werden, wobei das Chlorid mit der Titanverbindung und der Vanadiumverbindung und/oder mit der Organoaluminiumverbindung kombiniert ist.

19. Verfahren nach einem der Ansprüche 16 bis 18, dadurch gekennzeichnet, daß die Organoaluminiumverbindung mit einem Elektronendonor vor Kombination mit den anderen Katalysatorkomponenten gemischt wird.

20. Verfahren nach einem der Ansprüche 16 bis 19, dadurch gekennzeichnet, daß die Katalysatorkomponenten bei einer Temperatur unterhalb 125°C gemischt werden.

21. Verfahren nach Anspruch 20, dadurch gekennzeichnet, daß die Katalysatorkomponenten bei einer Temperatur unterhalb 75°C gemischt werden.